# EUROPÄISCHE PATENTSCHRIFT

(11) **EP 1 257 448 B1**
(45) Veröffentlichungstag und Bekanntmachung des Hinweises auf die Patenterteilung: **03.05.2006**
(21) Anmeldenummer: 01967033.0
(22) Anmeldetag: 25.08.2001
(51) Int. Cl.: B60S 1/48

(54) **ANORDNUNG ZUM ERWÄRMEN VON FLÜSSIGKEIT IN EINEM LEITUNGSSYSTEM**
SYSTEM FOR HEATING LIQUID IN A CONDUIT SYSTEM
DISPOSITIF DE RECHAUFFEMENT D'UN LIQUIDE DANS UN SYSTEME DE CONDUITE

(30) Priorität: 09.11.2000 DE 10055423
(43) Veröffentlichungstag der Anmeldung: 20.11.2002
(73) Patentinhaber: ROBERT BOSCH GMBH, 70442 Stuttgart (DE)
(72) Erfinder: FAYE, Ian, 70192 Stuttgart (DE)
(74) Vertreter: Gleiss & Grosse
(86) Internationale Anmeldenummer: PCT/DE2001/003268
(87) Internationale Veröffentlichungsnummer: WO 2002/038426

(56) Entgegenhaltungen:
- EP-A- 0 456 024
- DE-U- 29 715 336

## Beschreibung

Die Erfindung betrifft eine Anordnung zum Erwärmen von Flüssigkeit in einem Leitungssystem mit einer Leitung, welche eine Flüssigkeitszuführung aufweist und einem Heizdraht, welcher eine elektrische Stromzuführung aufweist und welcher durch die Leitung verläuft.

### Stand der Technik

Gattungsgemäße Anordnungen werden beispielsweise beim Reinigen von Scheiben eines Kraftfahrzeugs verwendet. Dabei wird eine Waschflüssigkeit aus einem Vorratsbehälter an die Scheiben oder auch die Scheinwerfer von Kraftfahrzeugen geführt, wobei durch den Heizdraht ein Gefrieren der Flüssigkeit bei niedrigen Temperaturen verhindert werden soll. Ebenfalls soll erreicht werden, dass ein einmal eingefrorenes System rasch wieder auftaut. Gattungsgemäße Anordnungen werden beispielsweise für ein in Wischerarmen integriertes Düsensystem verwendet.

Ein bekanntes Anschlussmodul besteht aus zwei Halbschalen, die nach der Montage der innen liegenden Einzelteile zu einem Gehäuse zusammengesetzt werden. In diesen Gehäusen werden sowohl die elektrische Zuleitung mit dem Heizdraht als auch der Heizdraht mit dem flüssigkeitsführenden Schlauch verbunden. Nachteilig an dieser Bauweise ist, dass das Volumen dieser Anschlussmodule des Standes der Technik verhältnismäßig groß ist. Folglich lässt es sich in vielen Fällen nicht in den eng bemessenen Einbauräumen eines Kraftfahrzeugs unterbringen. Ein weiterer Nachteil besteht darin, dass kundenspezifische Applikationen eine entsprechende Vielzahl von kundenabhängigen Gehäusevarianten erfordern. Ebenfalls ist es von Nachteil, dass bei einem technischen Ausfall unabhängig von der speziell vorliegenden Funktionsstörung das gesamte Modul ausgetauscht werden muss.

Aus der gattungsbildenden EP-A-0 456 024 ist eine Anordnung zur Erwärmen von Flüssigkeit bekannt, welche eine Flüssigkeitszuführung aufweist und einem Heizdraht, welcher eine elektrische Stromzuführung aufweist und welcher durch die Leitung verläuft, wobei die Flüssigkeitszuführung und die Stromzuführung in unterschiedlichen Bauteilen angeordnet sind. Die Stromzuführung ist in einem Stecker angeordnet. Die Verbindung zwischen Stromzuführung und Heizdraht ist durch ein in einem Steckergehäuse integriertes Dichtelement geschützt. Die Flüssigkeitszuführung ist in einem Verteilerstück angeordnet. Das Verteilerstück ist mit dem Stecker über eine separate Leitung verbunden.

### Vorteile der Erfindung

Die erfindungsgemäße Anordnung zum Erwärmen von Flüssigkeit mit einer Leitung, welche eine Flüssigkeitszuführung aufweist und einem Heizdraht, welcher eine elektrische Stromzuführung aufweist und welcher durch die Leitung verläuft, wobei die Flüssigkeitszuführung und die Stromzuführung in unterschiedlichen Bauteilen angeordnet sind und wobei die Stromzuführung in einem Stecker angeordnet ist, baut auf dem Stand der Technik dadurch auf, dass in einem Steckergehäuse ein integriertes Dichtelement, durch das die Verbindung zwischen Stromzuführung und Heizdraht geschützt ist, angeordnet ist und das Verteilerstück über eine Steckverbindung direkt mit dem Stecker verbunden ist. Hierdurch lässt sich die Anordnung in vorteilhafter Weise auf die vorgegebenen Einbauverhältnisse abstimmen. Ebenfalls ist es möglich, Variantenkonstruktionen, die aufgrund von kundenabhängigen Vorgaben notwendig sind, durch Kombination von kundenneutralen Standardteilen mit einer möglichst geringen Anzahl von kundenspezifischen Bauteilen zu realisieren. Beispielsweise kann das Bauteil, welches die Stromzuführung aufweist, kundenspezifisch gewählt werden, während für die Leitung mit der Flüssigkeitszuführung ein Standardbauteil verwendet wird. Ebenso ist der umgekehrte Fall mit kraftfahrzeugspezifischer Leitung und standardisiertem Bauteil zur Stromzuführung denkbar. Auch ist es dadurch, dass die Stromzuführung in einem Stecker angeordnet ist, möglich, dass sich über diesen Stecker in einfacher und sicherer Weise der Anschluss einer Batteriespannung realisieren lässt. Die Verbindung zwischen Stromzuführung und Heizdraht ist weiterhin durch ein in einem Steckergehäuse integriertes Dichtelement geschützt. Auf diese Weise wird eine zuverlässige Verbindung zwischen der Stromzuführung und dem Heizdraht sichergestellt. Die Integration des Dichtelementes in das Steckergehäuse verringert die Anzahl der für die erfindungsgemäße Anordnung erforderlichen Bauteile. Ferner ist die Montage der Anordnung einfach. Die Flüssigkeitszuführung ist in einem Verteilerstück angeordnet. Ein solches Verteilerstück ist variabel einsetzbar, wobei unterschiedliche Eingänge und Ausgänge des Verteilerstücks unterschiedliche Funktionen übernehmen können. In einer bevorzugten Ausführungsform Verläuft der Heizdraht geradlinig durch einen Leitungsabschnitt des Verteilerstückes, während die Flüssigkeitszufuhr seitlich an dem geraden Leitungselement ansetzt.

Ferner ist das Verteilerstück über eine Steckverbindung direkt mit dem Stecker verbunden. Eine solche Steckverbindung kann durch einen am Verteilerstück ansetzenden Schlauchnippel erfolgen, welcher in eine am Steckergehäuse angespritzte Schlauchtülle gesteckt wird. Auf diese Weise ist ein kurzer Weg zwischen dem Stecker und dem Verteiler realisiert, was für zahlreiche Anwendungen bevorzugt ist.

Es kann aber auch vorteilhaft sein, dass das Verteilerstück mit dem Stecker über eine separate Leitung verbunden ist. In diesem Fall kann an dem Stecker ebenfalls ein Schlauchnippel vorgesehen sein, und in die separate Leitung wird von beiden Seiten ein Schlauchnippel eingeführt, auf der einen Seite von dem Stecker, auf der anderen Seite von dem Verteiler. Die Schlauchnippel und die Durchmesser der Leitung beziehungsweise der beteiligten Schlauchtülle sind so gestaltet, dass die Nippel selbsthaltend in den Gegenstücken sitzen.

Der Erfindung liegt die überraschende Erkenntnis zugrunde, dass durch einen modularen Aufbau der Anordnung eine kostengünstige und montagefreundliche Lösung zur Verfügung gestellt wird. Es ist möglich, standardisierte Elemente, wie beispielsweise das Verteilerstück, mit kundenspezifischen Bauteilen, wie beispielsweise dem Stecker, zu kombinieren. Auf diese Weise kann kostengünstig eine Vielzahl von Modulvarianten aufgebaut werden.

### Zeichnungen

Die Erfindung wird nun mit Bezug auf die begleitenden Zeichnungen anhand bevorzugter Ausführungsformen beispielhaft erläutert.

Dabei zeigt:
Fig. 1 zum besseren Verständnis der Erfindung eine Ausführungsform einer bekannten Anordnung;
Fig. 2 zum besseren Verständnis der Erfindung eine weitere Ausführungsform einer bekannten Anordnung;
Fig. 3 eine Ausführungsform einer erfindungsgemäßen Anordnung, und
Fig. 4 zum besseren Verständnis der Erfindung eine weitere Ausführungsform einer bekannten Anordnung.

### Beschreibung der Ausführungsbeispiele

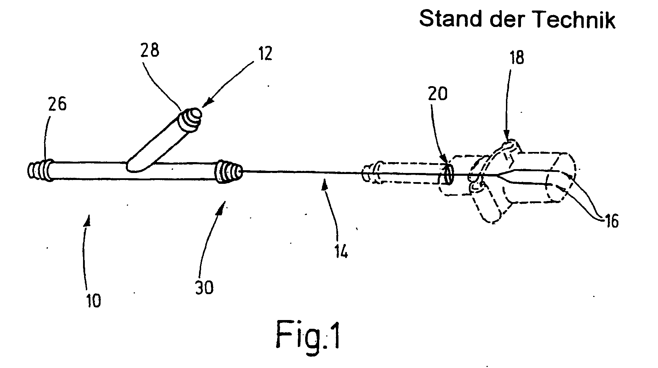

In Fig. 1 ist zum besseren Verständnis der Erfindung eine Ausführungsform einer bekannten Anordnung dargestellt. Eine Leitung 10, welche als Verteiler ausgelegt ist, ist mit einer Flüssigkeitszuführung 12 versehen. Die Enden 26, 28, 30 des Verteilers 10 sind als Schlauchnippel ausgebildet. Als weiteres Bauteil ist durch eine unterbrochene Linie ein Stecker 18 gezeigt. In der Zeichnung sind in dem Stecker 18 liegende Komponenten 14, 16, 20 sichtbar dargestellt. In dem Stecker wird ein Heizdraht 14 mit einer elektrischen Stromzuführung 16 verbunden. Die Verbindungsstelle ist durch ein Dichtelement 20 gegen Flüssigkeitseintritt geschützt. Der Heizdraht 14 tritt an einer Seite aus dem Stecker 18 aus und im weiteren Verlauf in den Verteiler 10 ein. Auf diese Weise ist ein modularer Aufbau realisiert, wobei ein lose in dem Verteiler verlegter Heizdraht verwendet wird.

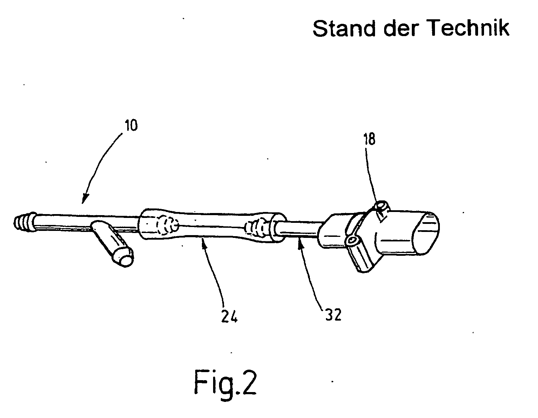

Figur 2 zeigt ebenfalls zum besseren Verständnis der Erfindung eine Darstellung, welche derjenigen gemäß Figur 1 ähnelt. Allerdings sind hier nicht die in dem Stecker 18 liegenden Komponenten sichtbar dargestellt. Ferner ist eine Schlauchverbindung 24 zwischen dem Verteiler 10 und dem Stecker angedeutet. Um eine derartige Schlauchverbindung mit einem Schlauch 24 zu ermöglichen, ist der Stecker 18 ebenfalls mit einem Schlauchnippel 32 ausgestattet. Der Schlauch 24 ist variabel gestaltbar, so dass praktisch beliebige relative Anordnungen zwischen Verteiler 10 und Stecker 18 ermöglicht werden.

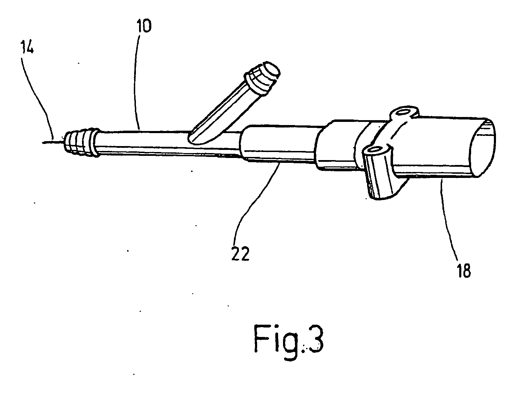

Figur 3 zeigt eine Ausführungsform einer erfindungsgemäßen Anordnung. Hier ist im Unterschied zu Fig. 2 eine direkte Verbindung zwischen dem Stecker 18 und dem Verteiler 10 gezeigt. In dieser Ausführungsform hat der Stecker 18 eine Schlauchtülle, welche an das Austrittsende des Heizdrahtes 14 am Steckergehäuse angespritzt ist. Diese Tülle 22 kann beispielsweise aus Weichgummi bestehen. In diese Schlauchtülle 22 kann nun der in Fig. 3 nicht erkennbare Schlauchnippel 30 des Verteilers 10 eingeführt werden.

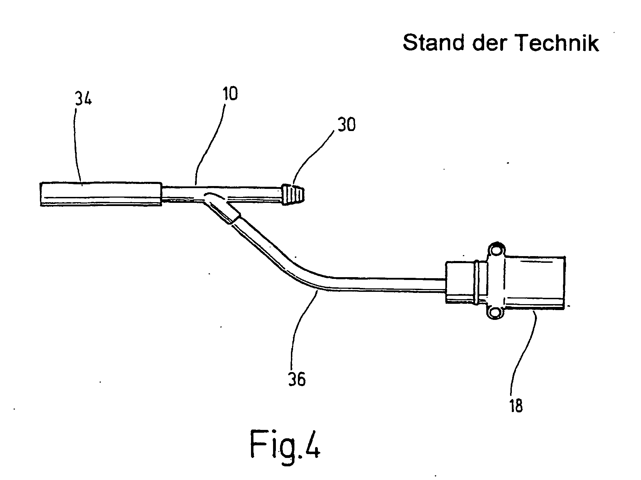

Figur 4 zeigt zum besseren Verständnis der Erfindung schematisch eine weitere Variante einer bekannten Anordnung. Hier ist zur Zuführung des Heizdrahtes ein seitlicher Eingang des Verteilers 10 gewählt. In diesem Fall würde man die zu erwärmende Flüssigkeit geradlinig durch den Verteiler 10 leiten, beispielsweise durch Einleitung in den Schlauchnippel 30. Am anderen Ende des Verteilers ist ein aufgesetzter Schlauch 34 dargestellt. Die Verbindung zwischen dem Stecker 18 und dem Verteiler 10 kann ebenfalls durch einen flexiblen Schlauch 36 realisiert sein.

## Patentansprüche

1. Anordnung zum Erwärmen von Flüssigkeit in einem Leitungssystem mit einer ein Verteilerstück (10) aufweisenden Leitung, welche eine Flüssigkeitszuführung (12) aufweist und mit einem Heizdraht (14), welcher eine elektrische Stromzuführung (16) aufweist und welcher durch die Leitung verläuft, wobei die Flüssigkeitszuführung (12) und die Stromzuführung (16) in unterschiedlichen Bauteilen (10, 18) angeordnet sind und die Stromzuführung (16) in einem Stecker (18) angeordnet ist, **dadurch gekennzeichnet, dass** in einem Steckergehäuse ein integriertes Dichtelement (20), durch das die Verbindung zwischen Stromzuführung (16) und Heizdraht (14) geschützt ist, angeordnet ist und das Verteilerstück (10) über eine Steckverbindung (22) direkt mit dem Stecker (18) verbunden ist.

2. Anordnung nach Anspruch 1, **dadurch gekennzeichnet, dass** die Flüssigkeitszuführung (12) seitlich an dem Verteilerstück (10) angeordnet ist.

3. Anordnung nach Anspruch 1 oder 2 **dadurch gekennzeichnet, dass** der Stecker (18) eine Schlauchtülle (22) aufweist, die an ein Austrittsende des Heizdrahts (14) am Steckergehäuse angespritzt ist.

4. Anordnung nach einem der vorangehenden Ansprüche, **dadurch gekennzeichnet, dass** die Schlauchtülle (22) aus Weichgummi gebildet ist.

## Claims

1. System for heating liquid in a conduit system having a conduit which includes a manifold piece (10) and which includes a liquid feed (12), and having a heating wire (14), which includes an electrical power supply (16) and which runs through the conduit, the liquid feed (12) and the power supply (16) being arranged in different components (10, 18), and the power supply (16) being arranged in a plug connector (18), **characterized in that** an integrated sealing element (1), which protects the connection between power supply (16) and heating wire (14), is arranged in a plug connector housing, and the manifold piece (10) is directly connected to the plug connector (18) via a plug connection (22).

2. System according to Claim 1, **characterized in that** the liquid feed (12) is arranged laterally on the manifold piece (10).

3. System according to Claim 1 or 2, **characterized in that** the plug connector (18) includes a hose nozzle (22), which is moulded integrally on the plug connector housing at an exit end of the heating wire (14).

4. System according to one of the preceding claims, **characterized in that** the hose nozzle (22) is formed from soft rubber.

## Revendications

1. Dispositif de réchauffement d'un liquide dans un système de conduite avec une conduite présentant un élément de distribution (10) et une conduite de liquide (12), et avec un filament chauffant (14) présentant une alimentation de courant électrique (16) et qui longe la conduite, la conduite de liquide (12) et l'alimentation de courant (16) étant dans différents composants (10, 18) et l'alimentation de courant (16) se trouvant dans un connecteur (18),
**caractérisé en ce qu'**
un élément d'étanchéité intégré (20), qui protège la liaison entre l'alimentation de courant (16) et le filament chauffant (14), est installé dans un boîtier de connecteur et l'élément de distribution (10) est relié directement au connecteur (18) par l'intermédiaire d'une connexion par fiche (22).

2. Dispositif selon la revendication 1,
**caractérisé en ce que**
la conduite de liquide (12) est montée latéralement sur l'élément de distribution (10).

3. Dispositif selon la revendication 1 ou 2,
**caractérisé en ce que**
le connecteur (18) présente une douille de tuyau (22) injectée à une extrémité de sortie du filament chauffant (14) sur le boîtier de connecteur.

4. Dispositif selon l'une quelconque des revendications précédentes,
**caractérisé en ce que**
la douille de tuyau (22) est constituée de caoutchouc mou.
